# EUROPÄISCHE PATENTSCHRIFT

(11) **EP 1 064 467 B1**
(45) Veröffentlichungstag und Bekanntmachung des Hinweises auf die Patenterteilung: **13.08.2003**
(21) Anmeldenummer: 00903546.0
(22) Anmeldetag: 20.01.2000
(51) Int. Cl.: F16D 3/38

(54) **KREUZGELENKGABEL**
UNIVERSAL JOINT YOKE
FOURCHETTE DE JOINT DE CARDAN

(30) Priorität: 23.01.1999 DE 19902608
(43) Veröffentlichungstag der Anmeldung: 03.01.2001
(73) Patentinhaber: Nacam Deutschland GmbH, 49448 Lemförde (DE)
(72) Erfinder: APPELT, Herbert, D-49356 Diepholz (DE); WINSEL, Sonja, D-31600 Uchte (DE)
(86) Internationale Anmeldenummer: DE0000166
(87) Internationale Veröffentlichungsnummer: WO00043689

(56) Entgegenhaltungen:
- DE-A- 3 144 811
- DE-A- 19 743 585
- US-A- 4 995 849

## Beschreibung

Die Erfindung betrifft eine Kreuzgelenkgabel mit zwei parallelen Gabelschenkeln, die jeweils einen Teilbereich für eine Lageraugenbohrung aufweisen.

Kreuzgelenkgabeln der gattungsgemäßen Art werden als Schmiedeteile in allen Bereichen des Maschinenbaus, insbesondere auch im Personenkraftwagen- und Nutzfahrzeugbau eingesetzt. Die verwendeten Kreuzgelenkgabeln werden hierbei mit üblicherweise runden Anschlußprofilen an der den Gabelschenkeln abgewandten Seite des Kreuzgelenkes verbunden. Zu diesem Zweck wird in das betreffende Kreuzgelenk eine Bohrung eingebracht, welche unter Umständen zusätzlich eine Innenverzahnung erhält. Diese Innenverzahnungen werden üblicherweise durch einen Räumvorgang mit Hilfe von Räumnadeln vorgenommen. Der Räumvorgang erfordert einen gewissen Freigang im Bereich zwischen den beiden Gabelschenkeln, so daß der mögliche maximale axiale Durchmesser für den Räum- oder Bohrungsvorgang durch das Abstandsmaß zwischen den Gabelschenkeln bestimmt ist. Aufgrund dieser Geometrieabhängigkeit sind im Stand der Technik für unterschiedlich große Anschlußprofile der Kreuzgelenkgabeln unterschiedliche Gelenkgabelgrößen üblich. Unterschiedliche Gelenkgabelgrößen wiederum bedingen zugehörige unterschiedliche Einzelteilkomponenten, wodurch die Herstellungskosten derartiger gattungsgemäßer Kreuzgelenkgabeln infolge von erhöhtem Lageraufwand und kleiner Herstellungsstückzahl vergrößert werden.

Aus der US 4,995,849 ist eine Kreuzgelenkgabel bekannt, die mittels eines Prägeverfahrens einstückig aus Blech hergestellt wird. Diese Kreuzgelenkgabel weist zwei parallele Gabelschenkel auf, die jeweils einen Teilbereich für eine Lageraugenbohrung enthalten, wobei an den einander zugewandten Innenseiten im Bereich der Lageraugenbohrungen eine Materialverstärkung vorhanden ist. Die Materialverstärkung im Bereich der Lageraugenbohrungen wird durch eine Materialumformung während des Prägens erzeugt.

Die DE 197 43 585 A1 offenbart ebenfalls eine Kreuzgelenkgabel mit zwei parallelen Gabelschenkeln, die jeweils einen Teilbereich für eine Lageraugenbohrung aufweisen, wobei die einander zugewandten Innenseiten im Bereich der Lageraugenbohrungen eine Materialverstärkung aufweisen.

Im Zusammenhang mit den verschiedenen im Stand der Technik verwendeten Kreuzgelenkbaugrößen ist anzumerken, daß die innerhalb der Gabelschenkel in den Lageraugenbohrungen angeordneten Nadellager eine gewisse Überdeckung, d. h. eine gewisse Gabelschenkeldicke notwendig machen. Aus diesem Grunde ist eine Vergrößerung des Abstandsmaßes zwischen den Gabelschenkeln zur Herbeiführung eines größeren maximalen Durchgangs für ein Anschlußprofil oftmals aufgrund vorgegebener Außenabmaße der Kreuzgelenkgabeln nicht möglich.

Aufgabe der vorliegenden Erfindung ist es daher, eine Kreuzgelenkgabel der gattungsgemäßen Art so weiterzuentwickeln, daß trotz ausreichender Überdeckung für die verwendeten Nadellager in den Lageraugenbohrungen ein maximales Anschlußmaß für die Verwendung größerer Anschlußprofile möglich ist, um auf diesem Wege die Anzahl der Gelenkbaugrößen für verschiedene Anschlußprofile zu verringern.

Diese Aufgabe wird erfindungsgemäß dadurch gelöst, daß die einander zugewandten Gabelschenkelinnenseiten im Bereich der Lageraugenbohrung in unbearbeitetem Zustand der Kreuzgelenkgabel eine Materialverstärkung aufweisen, wobei die Breite der Materialverstärkungen so bemessen ist, dass sie kleiner als die in die Teilbereiche eingebrachten Lageraugenbohrungen ist.

Die Materialverstärkung im Bereich der Lageraugenbohrungen hat die Wirkung, daß nach Einbringen der entsprechenden Lageraugenbohrungen an deren Rändern eine größere Überdeckung für Nadellager entsteht, als sie bei Kreuzgelenkgabeln nach dem Stand der Technik vorhanden ist. Andererseits bleibt die ursprüngliche Gabelschenkeldicke und das Abstandsmaß der Gabelschenkel als Freigang erhalten, so daß größere Anschlußprofile als die bislang verwendeten mit der Kreuzgelenkgabel verbunden werden können. Die größeren Anschlußprofile ermöglichen es erstmals, die aus dem Nutzkraftfahrzeugbau bekannten größeren Anschlußprofile mit kleineren Kreuzgelenkgabeln beispielsweise aus dem Personenkraftfahrzeugbau zu verbinden. Auf diese Weise lassen sich vorhandene Lenkgetriebeanschlüsse oder Lenksäulenanschlüsse von NKW zusammen mit den aufgrund ihrer Baugröße preiswerteren PKW-Kreuzgelenkbauteilen zusammen verwenden. Die gemeinsame Verwendung von NKW- und PKW-Bauteilen fördert eine Standardisierung von Bauteilen, Fertigung und Montage, was wiederum die Austauschbarkeit der einzelnen Bauteile erhöht und zu einer Verbilligung des Herstellungsprozesses beiträgt. Darüber hinaus lassen sich durch die erfindungsgemäße Maßnahme schon vorhandene Gelenkbauteile wie Nadellager, Dichtungen und Innenkreuze der PKW-Kreuzgelenkbaueinheit ohne Änderung verwenden. Selbstverständlich erstreckt sich die Verwendung des Erfindungsmerkmals auch auf alle üblichen PKW-Kreuzgelenkgabeln, bei denen ebenfalls eine Standardiesierung herbeigeführt werden kann.

Im folgenden wird ein Ausführungsbeispiel des Gegenstandes der Erfindung anhand der beigefügten Zeichnungen näher erläutert.

Es zeigt:
Figur 1: eine perspektivische Darstellung der erfindungsgemäßen Kreuzgelenkgabel im geschmiedeten, unbearbeiteten Zustand;
Figur 2: eine perspektivische Darstellung der Kreuzgelenkgabel aus Figur 1 in fertig bearbeitetem Zustand und
Figur 3: eine Schnittdarstellung in der Schnittebene bb aus Figur 2 der erfindungsgemäßen Kreuzgelenkgabel.

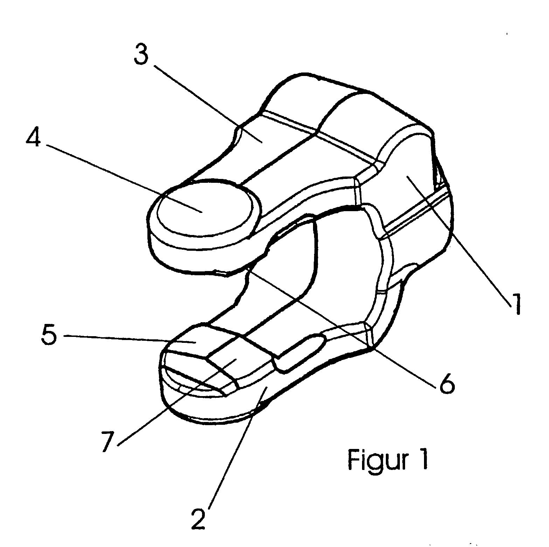

Das in Figur 1 abgebildete unbearbeitete Schmiedeteil der erfindungsgemäßen Kreuzgelenkgabel weist einen Anschlußkopf 1 und zwei sich an den Anschlußkopf U-förmig anschließende Gabelschenkel 2 und 3 auf. Die Gabelschenkel sind an ihrem vorderen freien Ende abgerundet und besitzen an diesem Ende jeweils einen Teilbereich 4 bzw. 5 für jeweils eine Lageraugenbohrung. An den einander zugewandten Innenseiten der U-förmig angeordneten Gabelschenkel 2 und 3 befinden sich in denjenigen Teilbereichen 4 und 5, in die bei der Bearbeitung der Kreuzgelenkgabel die Lageraugenbohrungen eingebracht werden, jeweils eine Materialverstärkung 6 und 7. Diese Materialverstärkung hat eine Dicke von 2 - 5 mm und steht mit diesem Maß über die Oberfläche der jeweiligen Gabelschenkelinnenseite hervor. Die Breite der Materialverstärkungen 6 und 7 ist so bemessen, daß sie kleiner ist als die in die Teilbereiche 4 und 5 eingebrachten Lageraugenbohrungen.

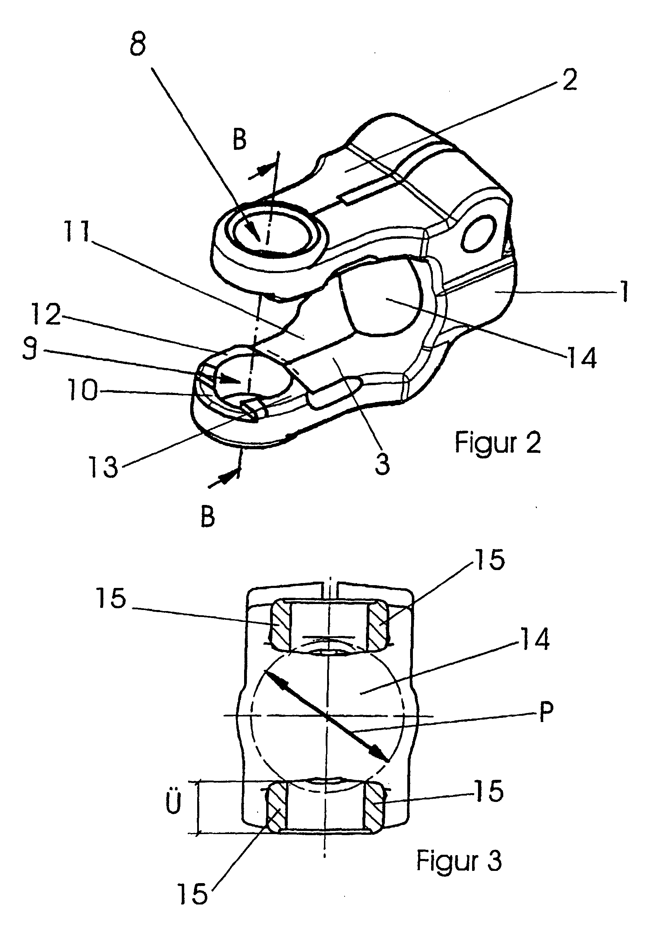

Dies ist insbesondere aus der Figur 2 zu entnehmen. In dieser Figur ist zu sehen, daß in den Teilbereichen 4 und 5 jeweils eine Lageraugenbohrung 8 bzw. 9 eingebracht wurde, wobei die beiden Bohrungen 8 und 9 miteinander fluchten. Neben dem Bereich der Materialverstärkungen 6 und 7 verbleibt an der Spitze der Gabelschenkel ein Teilbereich 10, welcher das gleiche Oberflächenniveau besitzt wie der auf der anderen Seite der Lageraugenbohrung liegende innere Oberflächenbereich 11 an der Innenseite eines Gabelschenkels 2 oder 3. Der durch die Lageraugenbohrung bestimmte Platz für ein darin einzusetzendes Nadellager besitzt somit in seiner Tiefe gesehen zwei unterschiedliche Überdeckungsbereiche. Am vorderen freien Ende im Teilbereich 10, sowie am hinteren, dem Anschlußkopf 1 zugewandten Ende besteht eine geringere Überdeckung als in den Seitenbereichen 12 und 13 der Lageraugenbohrung. Durch das gewählte Maß der Materialverstärkung 6 bzw. 7 ist jedoch gewährleistet, daß die seitlichen Teilbereiche 12 und 13 mit ihrer größeren Überdeckung für eine korrekte Lagerung des Nadellagers ausreichend sind.

Aus der Figur 2 wird darüber hinaus deutlich, daß in den Anschlußkopf 1 eine Durchgangsbohrung 14 eingebracht wird. Der Durchmesser dieser Durchgangsbohrung 14 bildet die maßgebliche Größe für ein zu verwendendes Anschlußprofil einer Lenkwelle oder eines Lenkgetriebes. Aus der Figur 3 ist ersichtlich, daß das maximale, durch den Pfeil P gekennzeichnete Durchmessermaß für die Durchgangsbohrung 14 begrenzt wird durch die Seitenbereiche 15, in denen das für eine korrekte Nadellagerung notwendige Überdeckungsmaß Ü noch vorhanden ist. Der maximal mögliche Durchmesser P für die Durchgangsbohrung 14 ist in der Figur 3 zur Verdeutlichung mittels eines strichpunktierten Kreises angedeutet. Die Durchgangsbohrung 14 wird durch einen Bohr- oder Räumvorgang hergestellt, gleichzeitig wird im vorderen Gabelbereich an der Stelle, an der die senkrechte Durchgangsbohrung für die Aufnahme der Nadellager angeordnet ist, durch das Bohr- oder Räumwerkzeug gleichzeitig ebenfalls Material entfernt.

### Bezugszeichenliste:

- 1.: Anschlußkopf
- 2.: Gabelschenkel
- 3.: Gabelschenkel
- 4.: Teilbereich
- 5.: Teilbereich
- 6.: Materialverstärkung
- 7.: Materialverstärkung
- 8.: Lageraugenbohrung
- 9.: Lageraugenbohrung
- 10.: Teilbereich
- 11.: Oberflächenbereich
- 12.: seitlicher Teilbereich
- 13.: seitlicher Teilbereich
- 14.: Durchgangsbohrung
- 15.: Seitenbereich

## Patentansprüche

1. Kreuzgelenkgabel als Schmiedeteil mit zwei parallelen Gabelschenkeln (2, 3), die jeweils einen Teilbereich (4, 5) für eine Lageraugenbohrung (8, 9) aufweisen, wobei die einander zugewandten Innenseiten im Bereich der Lageraugenbohrungen (8, 9) im unbearbeiteten Zustand eine Materialverstärkung (6, 7) aufweisen,
**dadurch gekennzeichnet, dass**
die Breite der Materialverstärkungen (6, 7) so bemessen ist, dass sie kleiner als die in die Teilbereiche (4, 5) eingebrachten Lageraugenbohrungen (8, 9) ist.

2. Kreuzgelenkgabel nach Anspruch 1,
**dadurch gekennzeichnet, dass**
der durch die Lageraugenbohrung (8, 9) bestimmte Platz für ein darin einzusetzendes Nadellager in seiner Tiefe gesehen zwei unterschiedliche Überdeckungsbereiche besitzt.

3. Kreuzgelenkgabel nach Anspruch 2,
**dadurch gekennzeichnet, dass**
am vorderen freien Ende der Gabelschenkel (2, 3) sowie am hinteren, dem Anschlußkopf (1) zugewandten Ende eine geringere Überdeckung als in den Seitenbereichen (12, 13) der Lageraugenbohrungen (8, 9) besteht.

4. Kreuzgelenkgabel nach Anspruch 1, 2 oder 3,
**dadurch gekennzeichnet, dass**
die zur Gabelinnenseite vorstehende Höhe der Materialverstärkung 2-5 mm gegenüber der übrigen Oberfläche der Gabelschenkelinnenseiten beträgt.

## Claims

1. A universal joint fork in the form of a forging, having two parallel fork arms (2, 3), which each comprise a portion (4, 5) for a bearing boss bore (8, 9), the mutually facing inner sides having a material reinforcement (6, 7) in the area of the bearing boss bores (8, 9) in the unmachined state,
**characterised in that**
the width of the material reinforcements (6, 7) is such that it is smaller than the bearing boss bores (8, 9) introduced into the portions (4, 5).

2. A universal joint fork according to claim 1,
**characterised in that**
the space determined by the bearing boss bore (8, 9) for a needle bearing to be inserted therein has from the point of view of depth two different overlap areas.

3. A universal joint fork according to claim 2,
**characterised in that**
the overlap is smaller at the front free end of the fork arms (2, 3) and at the rear end facing the connecting head (1) than in the lateral areas (12, 13) of the bearing boss bores (8, 9).

4. A universal joint fork according to claim 1, 2 or 3,
**characterised in that**
the height of the material reinforcement projecting towards the inside of the fork amounts to 2-5 mm relative to the remaining surface of the fork arm inner sides.

## Revendications

1. Mâchoire de joint de cardan en tant que pièce forgée ayant deux branches de mâchoire parallèles (2, 3), qui comprennent chacune une sous-zone (4, 5) pour un alésage d'appui (8, 9), les faces internes tournées l'une vers l'autre dans le voisinage des alésages d'appui (8, 9) comprenant à l'état non usiné un renfort de matière (6, 7),
**caractérisée en ce que**
la largeur des renforts de matière (6, 7) est déterminée de sorte qu'elle est plus petite que les alésages d'appui (8, 9) ménagés dans les sous-zones (4, 5).

2. Mâchoire de joint de cardan conforme à la revendication 1,
**caractérisée en ce que**
la place déterminée à travers l'alésage d'appui (8, 9) pour une douille à aiguilles introduite dans celui-ci possède, vue dans sa profondeur, deux zones de recouvrement différentes.

3. Mâchoire de joint de cardan conforme à la revendication 2,
**caractérisée en ce que**
un faible recouvrement, comme dans les sous-zones (12, 13) des alésages d'appui (8, 9), est situé à l'extrémité libre avant des branches de mâchoire (2, 3) ainsi qu'à l'extrémité arrière orientée vers la tête de liaison (1).

4. Mâchoire de joint de cardan selon la revendication 1, 2 ou 3,
**caractérisée en ce que**
la hauteur proéminente sur les faces internes de mâchoire du renfort de matière est de 2-5 mm par rapport aux surfaces restantes des faces internes de branche de mâchoire.
